(19) **Europäisches Patentamt**
**European Patent Office**
**Office européen des brevets**

(11) **EP 3 473 658 A1**

(12) **EUROPÄISCHE PATENTANMELDUNG**

(43) Veröffentlichungstag:
**24.04.2019  Patentblatt 2019/17**

(21) Anmeldenummer: **17196961.1**

(22) Anmeldetag: **18.10.2017**

(51) Int Cl.:
**C08G 64/18** *(2006.01)*      **C08G 64/34** *(2006.01)*
**C08G 65/26** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **DIBLOCKCOPOLYMERE UND DEREN VERWENDUNG ALS TENSIDE**

(57)     Die vorliegende Erfindung betrifft die Verwendung von Diblockcopolymeren als Tenside, sowie ein Verfahren zur Herstellung von Diblockcopolymeren, enthaltend einen kohlenwasserstoffhaltigen Block A und einem polyethercarbonathaltigen Block B, durch Anlagerung von Alkylenoxid und Kohlendioxid an H-funktionelle Startersubstanz in Gegenwart eines Doppelmetallcyanid-Katalysators, dadurch gekennzeichnet, dass
die H-funktionelle Startersubstanz eine OH-Funktionalität von 1 besitzt,
und
die H-funktionelle Startersubstanz ausgewählt ist aus einer oder mehreren Verbindungen der Gruppe monofunktioneller Alkohole mit 10 bis 20 Kohlenstoffatomen.

**EP 3 473 658 A1**

**Beschreibung**

Die vorliegende Erfindung betrifft ein Verfahren zur Herstellung von Diblockcopolymeren enthaltend einen kohlenwasserstoffhaltigen Block A und einen polyethercarbonathaltigen Block B durch Anlagerung von Alkylenoxid und Kohlendioxid an H-funktionelle Startersubstanz in Gegenwart eines Doppelmetallcyanid-Katalysators (DMC-Katalysator), sowie die Verwendung dieser Diblockcopolymere als Tenside.

Verfahren zur Herstellung von Blockcopolymeren mit einem niedrigen Polydispersitätsindex (PDI) sind zum Beispiel aus den Patentschriften WO 00/14045 A1 und EP 2 223 953 A1 bekannt. Die Blockcopolymere werden dabei durch die Anlagerung von Alkylenoxiden an unter anderem einwertigen Alkoholen in Anwesenheit eines DMC-Katalysators erhalten.

WO 2011/117332 A1 beschreibt eine Methode zur Herstellung von Polyethercarbonatpolyolen aus H-funktioneller Startersubstanz, Alkylenoxid und Kohlenstoffdioxid in Anwesenheit eines DMC-Katalysators. Die Temperaturstabilität von Emulsionen der erhaltenen Polyethercarbonatpolyole oder dessen Abbaubarkeit wird in der Patentschrift nicht offenbart.

DE 27 12 162 A1 beschreibt die Herstellung von Blockcopolymeren unter Verwendung von unter anderem $C_8$- bis $C_{22}$-Alkoholen und dem Einbau von Carbonat-Einheiten. Es wird beschrieben, dass diese Verbindungen oberflächenaktiv und biologisch abbaubar sind. Für das Verfahren werden jedoch hohe Temperaturen und lange Reaktionszeiten benötigt.

Die Aufgabe der vorliegenden Erfindung ist es daher ein Verfahren bereitzustellen, welches ohne hohe Temperaturen, lange Reaktionszeiten und Neutralisationsschritte durchgeführt werden kann und zu abbaubaren Diblockcopolymeren mit hohen HLB-Werten (Hydrophilic-Lipophilic-Balance-Wert) und einem niedrigen Polydispersitätsindex (PDI) führt. Die Diblockcopolymere sollen weiterhin als Tenside mit einem temperaturunabhängigeren Emulgierverhalten verwendet werden können.

Überraschend wurde gefunden, dass die zuvor genannte Aufgabe gelöst wird durch ein Verfahren zur Herstellung von Diblockcopolymeren, enthaltend einen kohlenwasserstoffhaltigen Block A und einen polyethercarbonathaltigen Block B, durch Anlagerung von Alkylenoxid und Kohlendioxid an H-funktionelle Startersubstanz in Gegenwart eines Doppelmetallcyanid-Katalysators, dadurch gekennzeichnet, dass
die H-funktionelle Startersubstanz eine OH-Funktionalität von 1 besitzt,
und
die H-funktionelle Startersubstanz ausgewählt ist aus einer oder mehreren Verbindungen der Gruppe monofunktioneller Alkohole mit 10 bis 20 Kohlenstoffatomen.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-1 (Juni 2013).

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Der HLB-Wert beschreibt das Verhältnis zwischen dem hydrophilen und lipophilen Anteil des Diblockcopolymers und wird auf Grund der Korrelation zwischen der Phaseninversionstemperatur (PIT) des Diblockcopolymers und des HLB-Werts durch einen Abgleich mit bekannten nicht-ionischen Tensiden bestimmt. Die PIT ist dabei die Temperatur, bei der aus einer Wasser-in-Öl-Emulsion eine Öl-in-Wasser-Emulsion wird.

Nachfolgend wird die Erfindung im Detail erläutert. Verschiedene Ausführungsformen sind dabei beliebig miteinander kombinierbar, solange sich für den Fachmann aus dem Kontext nicht eindeutig das Gegenteil ergibt.

Die Herstellung der Diblockcopolymere erfolgt durch katalytische Anlagerung von Kohlendioxid und Alkylenoxiden an H-funktionellen Startersubstanzen. Die Anlagerung von Alkylenoxid und Kohlendioxid an die H-funktionelle Startersubstanz bildet dabei den Block B des Diblockcopolymers und besteht aus einem polyethercarbonathaltigen Rest.

Die H-funktionelle Startersubstanz bildet nach der Anlagerung von Alkylenoxid und Kohlenstoffdioxid im Diblockcopolymer den kohlenwasserstoffhaltigen Block A. Erfindungsgemäß wird als geeignete H-funktionelle Startersubstanz ein oder mehrere monofunktionelle Alkohole mit 10 bis 20 Kohlenstoffatomen eingesetzt. Bevorzugt besitzt der monofunktionelle Alkohol 10 bis 18 Kohlenstoffatome, besonders bevorzugt 10 bis 16 und insbesondere 12 bis 16 Kohlenstoffatome. Beispielsweise eingesetzt werden können Decanol, Undecanol, Dodecanol, Tridecanol, Tetradecanol, Pentadecanol, Hexadecanol, Heptadecanol, Octadecanol, Nonadecanol, Eicosanol, 2,2-Dimethyl-3-octanol, 9-Decen-1-ol, 9-Hexadecen-1-ol, 9-Octadecen-1-ol, 9,12,15-Octadecatrien-1-ol, Farnesol, Lemonol, Citronellol, 2-Decin-1-ol, Menthol, Cuminalkohol. Bevorzugt eingesetzt werden Decanol, Undecanol, Dodecanol, Tridecanol, Tetradecanol, Pentadecanol, Hexadecanol, Heptadecanol, Octadecanol, Nonadecanol, Eicosanol und besonders bevorzugt Dodecanol, Tridecanol, Tetradecanol, Hexadecanol und Octadecanol. Bevorzugt ist der monofunktionelle Alkohol aliphatisch.

Vorzugsweise haben die monofunktionellen Alkohole eine Struktur gemäß der allgemeinen Formel (I)

$$R^1\text{-OH} \qquad (I)$$

wobei $R^1$ für eine Alkylgruppe, Alkenylgruppe oder Alkinylgruppe, bevorzugt für eine Alkylgruppe oder Alkenylgruppe und besonders bevorzugt für eine Alkylgruppe steht.

Als Alkylgruppe können beispielsweise Decan, Undecan, Dodecan, Tridecan, Tetradecan, Pentadecan, Hexadecan, Heptadecan, Octadecan, Nonadecan, Eicosan, 2-Propylheptan, 2-Butyloctan, 3,3-Diethylhexan, 2,2-Dimethyloctan eingesetzt werden. Bevorzugt sind Decan, Dodecan, Tetradecan, Hexadecan, Octadecan und Eicosan, besonders bevorzugt Dodecan, Tridecan, Tetradecan, Hexadecan und Octadecan.

Als Alkenylgruppe eingesetzt werden können beispielsweise Decen, Undecen, Dodecen, Tridecen, Tetradecen, Pentadecen, Hexadecen, Heptadecen, Octadecen, Nonadecen, Tridecen, Eicosen.

Als Alkinylgruppe eingesetzt werden können beispielsweise Decin, Undecin, Dodecin, Tridecin, Tetradecin, Pentadecin, Hexadecin, Heptadecin, Octadecin, Nonadecin, Tridecen und Eicosin.

Die H-funktionelle Startersubstanz kann einzeln oder als Gemisch eingesetzt werden.

Allgemein können für das erfindungsgemäße Verfahren Alkylenoxide mit 2-45 Kohlenstoffatomen eingesetzt werden. Bei den Alkylenoxiden mit 2-45 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, einfach epoxidierte Fette als Mono-, Di- und Triglyceride, einfach epoxidierte Fettsäuren, C1-C24-Ester von einfach epoxidierten Fettsäuren, einfach epoxidierte Derivate des Glycidols wie beispielsweise Methylglycidylether, Ethylglycidylether, 2-Ethylhexylglycidylether, Allylglycidylether, Glycidylmethacrylat. Vorzugsweise wird als Alkylenoxid Ethylenoxid oder ein Gemisch aus mindestens zwei Alkylenoxiden enthaltend Ethylenoxid eingesetzt, besonders bevorzugt wird nur Ethylenoxid eingesetzt.

In einer bevorzugten Ausführungsform wird ein Gemisch aus mindestens zwei Alkylenoxiden enthaltend Ethylenoxid eingesetzt, wobei das Gemisch frei von Propylenoxid ist.

Vorzugsweise ist das Verfahren dadurch gekennzeichnet, dass

($\alpha$) die H-funktionelle Startersubstanz oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Suspensionsmittel vor oder nach der Trocknung zugesetzt wird,

($\beta$) zur Aktivierung eine Teilmenge (bezogen auf die Gesamtmenge der bei der Aktivierung und Copolymerisation eingesetzten Menge an Alkylenoxiden) von Alkylenoxid zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) Alkylenoxid, Kohlendioxid und gegebenenfalls H-funktionelle Startersubstanz zu der aus Schritt ($\beta$) resultierenden Mischung zugesetzt werden,

wobei wenigstens in einem der Schritte ($\alpha$) oder ($\gamma$) mindestens eine H-funktionelle Startersubstanz zugesetzt wird.

Zu Schritt ($\alpha$):

Vorzugsweise wird in Schritt ($\alpha$) die Gesamtmenge der H-funktionellen Startersubstanz sowie gegebenenfalls DMC-Katalysator im Reaktor vorgelegt. Alternativ können auch in Schritt ($\alpha$) ein Suspensionsmittel, das keine H-funktionellen Gruppen enthält, und zusätzlich eine Teilmenge der H-funktionellen Startersubstanz sowie gegebenenfalls DMC-Katalysator im Reaktor vorgelegt werden, oder es können auch in Schritt ($\alpha$) eine Teilmenge der H-funktionellen Startersubstanz sowie gegebenenfalls DMC-Katalysator im Reaktor vorgelegt werden. Weiterhin kann auch in Schritt ($\alpha$) ein Suspensionsmittel, das keine H-funktionellen Gruppen enthält, im Reaktor gegebenenfalls gemeinsam mit DMC-Katalysator vorgelegt und somit keine H-funktionelle Startersubstanz im Reaktor vorgelegt werden.

Der DMC-Katalysator wird vorzugsweise in einer Menge eingesetzt, so dass der Gehalt an DMC-Katalysator zum resultierenden Reaktionsprodukt 10 bis 10000 ppm, besonders bevorzugt 20 bis 5000 ppm und höchst bevorzugt 50 bis 500 ppm beträgt.

In einer bevorzugten Ausführungsform wird in das resultierende Gemisch aus DMC-Katalysator mit Suspensionsmittel und/oder H-funktioneller Startersubstanz bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus DMC-Katalysator mit Suspensionsmittel und/oder H-funktioneller Startersubstanz bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann beispielsweise in fester Form oder als Suspension in einem oder mehreren Suspensionsmittel(n) oder als Suspension in einer oder mehreren H-funktionellen Startersubstanz(en) zugegeben werden.

In einer weiteren bevorzugten Ausführungsform wird in Schritt ($\alpha$)

($\alpha$-I) Suspensionsmittel und/oder eine Teilmenge oder die Gesamtmenge an H-funktioneller Startersubstanz vorgelegt und

($\alpha$-II) die Temperatur des Suspensionsmittels und/oder der H-funktionellen Startersubstanz auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 200 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zum Suspensionsmittel und/oder zur H-funktionellen Startersubstanz in Schritt ($\alpha$-I) oder unmittelbar anschließend in Schritt ($\alpha$-II) zugesetzt wird, und
wobei das Suspensionsmittel keine H-funktionellen Gruppen enthält.

Zu Schritt ($\beta$):

Schritt ($\beta$) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxidverbindung bei Temperaturen von 90 bis 150°C zur DMC-Katalysator-Suspension zugegeben wird und dann die Zugabe der Alkylenoxidverbindung unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Auftreten der Wärmeentwicklung. Gegebenenfalls kann die Teilmenge Alkylenoxidverbindung in mehreren Einzelschritten, gegebenenfalls in Gegenwart von $CO_2$, zum DMC-Katalysator gegeben werden und dann jeweils die Zugabe der Alkylenoxidverbindung unterbrochen werden. In diesem Fall umfasst der Verfahrensschritt der Aktivierung die Zeitspanne von der Zugabe der ersten Teilmenge an Alkylenoxidverbindung, gegebenenfalls in Gegenwart von $CO_2$, zum DMC-Katalysator bis zum Auftreten der Wärmeentwicklung nach Zugabe der letzten Teilmenge an Alkylenoxidverbindung. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung des Alkylenoxids (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 70 bar und bevorzugt 20 mbar bis 50 bar beträgt.

In einer bevorzugten Ausführungsform beträgt die bei der Aktivierung in Schritt ($\beta$) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt ($\alpha$) eingesetzte Menge an Suspensionsmittel und/oder H-funktioneller Startersubstanz). Das Alkylenoxid kann in einem Schritt oder portionsweise in mehreren Teilmengen zugegeben werden. Bevorzugt wird nach Zugabe einer Teilmenge Alkylenoxids die Zugabe des Alkylenoxids bis zum Auftreten der Wärmeentwicklung unterbrochen und erst dann die nächste Teilmenge an Alkylenoxid zugegeben. Bevorzugt ist auch eine zweistufige Aktivierung (Schritt $\beta$), wobei

(β1) in einer ersten Aktivierungsstufe die Zugabe einer ersten Teilmenge von Alkylenoxid unter Inertgasatmosphäre erfolgt und

(β2) in einer zweiten Aktivierungsstufe die Zugabe einer zweiten Teilmenge von Alkylenoxid unter Kohlendioxid-Atmosphäre erfolgt.

Zu Schritt (γ):

Für das erfindungsgemäße Verfahren hat sich gezeigt, dass Schritt (γ) vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Unterhalb von 50°C läuft die Reaktion unter Bildung eines Diblockcopolymers nur sehr langsam ab. Bei Temperaturen oberhalb von 150°C steigt die Menge an unerwünschten Nebenprodukten stark an.

Die Dosierung der Alkylenoxide und des Kohlendioxids kann simultan, wechselweise oder sequentiell erfolgen, wobei die gesamte Kohlendioxidmenge auf einmal oder dosiert über die Reaktionszeit zugegeben werden kann. Es ist möglich, während der Zugabe des Alkylenoxids den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung des Alkylenoxids bzw. des $CO_2$ erfolgt simultan, wechselweise oder sequentiell zur Kohlendioxid Dosierung. Es ist möglich, das Alkylenoxid mit konstanter Dosierrate zu dosieren oder die Dosierrate allmählich oder schrittweise zu steigern oder zu senken oder das Alkylenoxid Portionsweise zuzugeben. Bevorzugt wird das Alkylenoxid mit konstanter Dosierrate dem Reaktionsgemisch zugegeben. Werden mehrere Alkylenoxide zur Synthese der Diblockcopolymere eingesetzt, so können die Alkylenoxide einzeln oder als Gemisch dosiert werden. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können.

Vorzugsweise wird ein Überschuss an Kohlendioxid bezogen auf die berechnete Menge an eingebautem Kohlendioxid im Diblockcopolymer eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120,00 bar, bevorzugt 0,10 bis 110,00 bar, besonders bevorzugt von 1,00 bis 100,00 bar für die Copolymerisation zur Herstellung der Diblockcopolymere als vorteilhaft erwiesen. Es ist möglich, das Kohlendioxid kontinuierlich oder diskontinuierlich zuzuführen. Dies hängt davon ab, wie schnell die Alkylenoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Menge des Kohlendioxids (angegeben als Druck) kann bei der Zugabe der Alkylenoxide ebenso variieren. Je nach den gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Bei einem Verfahren mit Dosierung H-funktioneller Startersubstanz in Schritt (γ) kann die Dosierung H-funktioneller Startersubstanz, des Alkylenoxids und gegebenenfalls auch des Kohlendioxids simultan oder sequentiell (portionsweise) erfolgen, beispielsweise kann die gesamte Kohlendioxidmenge, die Menge an H-funktionellen Startersubstanzen und/oder die in Schritt (γ) dosierte Menge an Alkylenoxiden auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder der H-funktionellen Startersubstanz, den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung des Alkylenoxids und/oder der H-funktionellen Startersubstanz erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Diblockcopolymere eingesetzt, so können die Alkylenoxide einzeln oder als Gemisch dosiert werden. Die Dosierung der Alkylenoxide bzw. der H-funktionellen Startersubstanzen kann simultan oder sequentiell über jeweils separate Dosierungen (Zugaben) erfolgen oder über eine oder mehrere Dosierungen, wobei die Alkylenoxide bzw. die H-funktionelle Startersubstanzen einzeln oder als Gemisch dosiert werden können.

In einer bevorzugten Ausführungsform wird in Schritt (γ) die Dosierung der H-funktionellen Startersubstanz zeitlich vor der Zugabe des Alkylenoxids beendet.

Vorzugsweise wird ein Überschuss an Kohlendioxid bezogen auf die berechnete Menge an eingebautem Kohlendioxid im Diblockcopolymer eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120,00 bar, bevorzugt 0,10 bis 110,00 bar, besonders bevorzugt von 1,00 bis 100,00 bar für die Copolymerisation zur Herstellung der Diblockcopolymere als vorteilhaft erwiesen. Es ist möglich, das Kohlendioxid kontinuierlich oder diskontinuierlich zuzuführen. Dies hängt davon ab, wie schnell die Alkylenoxide verbraucht werden und ob der Block B gegebenenfalls längere Polyether-Einheiten enthalten soll. Die Menge des Kohlendioxids (angegeben als Druck) kann bei der Zugabe der Alkylenoxide ebenso variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Eine bevorzugte Ausführungsform des erfindungsgemäßen Verfahrens ist unter anderem dadurch gekennzeichnet, dass in Schritt ($\gamma$) die Gesamtmenge der H-funktionellen Startersubstanz zugegeben wird, also in Schritt ($\alpha$) ein Suspensionsmittel eingesetzt wird. Diese Zugabe kann mit einer konstanten Dosierrate, mit einer variierenden Dosierrate oder portionsweise erfolgen.

Bevorzugt werden die Diblockcopolymere in einem kontinuierlichen Verfahren hergestellt, das sowohl eine kontinuierliche Copolymerisation als auch eine kontinuierliche Zugabe der H-funktionellen Startersubstanz umfasst. Gegenstand der Erfindung ist daher auch ein Verfahren, wobei in Schritt ($\gamma$) die H-funktionelle Startersubstanz, das Alkylenoxid sowie der DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt ($\gamma$) der DMC-Katalysator, welcher in H-funktioneller Startersubstanz suspendiert wurde, kontinuierlich zugegeben. Die Dosierung des Alkylenoxids, der H-funktionellen Startersubstanz und des DMC-Katalysators kann über separate oder gemeinsame Dosierstellen erfolgen. In einer bevorzugten Ausführungsform werden das Alkylenoxid und die H-funktionelle Startersubstanz über separate Dosierstellen kontinuierlich dem Reaktionsgemisch zugeführt. Diese Zugabe der H-funktionellen Startersubstanz kann als kontinuierliche Zudosierung in den Reaktor oder portionsweise erfolgen.

Beispielsweise wird für das kontinuierliche Verfahren zur Herstellung der Diblockcopolymere gemäß den Schritten ($\alpha$) und ($\beta$) eine aktivierte DMC-Katalysator-Suspensionsmittel-Mischung hergestellt, dann werden gemäß Schritt ($\gamma$)

($\gamma$1) jeweils eine Teilmenge an H-funktioneller Startersubstanz, Alkylenoxid und Kohlendioxid zudosiert zum Initiieren der Copolymerisation, und

($\gamma$2) während des Fortschreitens der Copolymerisation jeweils die verbleibende Menge an DMC-Katalysator, H-funktioneller Startersubstanz und Alkylenoxid in Gegenwart von Kohlendioxid kontinuierlich zudosiert, wobei gleichzeitig resultierendes Reaktionsgemisch kontinuierlich aus dem Reaktor entfernt wird.

In Schritt ($\gamma$) wird der DMC-Katalysator bevorzugt suspendiert in der H-funktionellen Startersubstanz zugegeben.

Die Schritte ($\alpha$), ($\beta$) und ($\gamma$) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Die Schritte ($\alpha$), ($\beta$) und ($\gamma$) können in einem Rührkessel durchgeführt werden, wobei der Rührkessel je nach Ausführungsform und Betriebsweise über den Reaktormantel, innen liegende und/oder in einem Umpumpkreislauf befindliche Kühlflächen gekühlt wird. Sowohl im Semi-batch-Verfahren, bei der das Produkt erst nach Ende der Reaktion entnommen wird, als auch im kontinuierlichen Verfahren, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren.

In einer bevorzugten Ausführungsform wird die gemäß den Schritten ($\alpha$) und ($\beta$) resultierende aktivierte DMC-Katalysator enthaltende Mischung in demselben Reaktor weiter mit Alkylenoxid, H-funktioneller Startersubstanz und Kohlendioxid umgesetzt. In einer weiteren bevorzugten Ausführungsform wird die gemäß den Schritten ($\alpha$) und ($\beta$) resultierende aktivierte DMC-Katalysator enthaltende Mischung in einem anderen Reaktionsbehältnis (beispielsweise einem Rührkessel, Rohrreaktor oder Schlaufenreaktor) weiter mit Alkylenoxid, H-funktioneller Startersubstanz und Kohlendioxid umgesetzt.

Bei Reaktionsführung in einem Rohrreaktor wird die gemäß den Schritten ($\alpha$) und ($\beta$) resultierende aktivierte DMC-Katalysator enthaltende Mischung, H-funktionelle Startersubstanz, Alkylenoxid und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Durchführung der Schritte ($\alpha$), ($\beta$) und ($\gamma$) verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittlerem Molekulargewicht größer als 500 g/mol enthalten.

Die erfindungsgemäßen DMC-Katalysatoren werden vorzugsweise erhalten, indem man

(a) im ersten Schritt eine wässrige Lösung eines Metallsalzes mit der wässrigen Lösung eines Metallcyanidsalzes in Gegenwart eines oder mehrer organischen Komplexliganden, z.B. eines Ethers oder Alkohols, umsetzt,

(b) wobei im zweiten Schritt der Feststoff aus der aus (a) erhaltenen Suspension durch bekannte Techniken (wie Zentrifugation oder Filtration) abgetrennt wird,

(c) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(d) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

$$M(X)_n \qquad (II)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalat ist und

n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (III),

$$M_r(X)_3 \qquad (III)$$

wobei

M ausgewählt ist aus den Metallkationen $Fe^{3+}$, $Al^{3+}$, $Co^{3+}$ und $Cr^{3+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

r ist 2, wenn X = Sulfat, Carbonat oder Oxalat ist und

r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M(X)_s \qquad (IV)$$

wobei

M ausgewählt ist aus den Metallkationen $Mo^{4+}$, $V^{4+}$ und $W^{4+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

s ist 2, wenn X = Sulfat, Carbonat oder Oxalat ist und

s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_t \qquad (V)$$

wobei

M ausgewählt ist aus den Metallkationen $Mo^{6+}$ und $W^{6+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t ist 3, wenn X = Sulfat, Carbonat oder Oxalat ist und

t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)-chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

$$(Y)_a M'(CN)_b (A)_c \qquad (VI)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. Li$^+$, Na$^+$, K$^+$, Rb$^+$) und Erdalkalimetall (d.h. Be$^{2+}$, Mg$^{2+}$, Ca$^{2+}$, Sr$^{2+}$, Ba$^{2+}$),

A ausgewählt ist aus einem oder mehreren Anionen der Gruppe bestehend aus Halogenide (d..h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (VII)

$$M_x[M'_{x'}(CN)_y]_z \qquad (VII),$$

worin M wie in Formel (II) bis (V) und

M' wie in Formel (VI) definiert ist, und

x, x', y und z sind ganzzahlig und so gewählt, dass die Elektronenneutralität der Doppelmetallcyanidverbindung gegeben ist.

Vorzugsweise ist

x = 3, x' = 1, y = 6 und z = 2,

M = Zn(II), Fe(II), Co(II) oder Ni(II) und

M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, *tert*-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-*tert*-butylether, Diethylenglykol-mono-*tert*-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, *tert*-Butanol 2-Methyl-3-buten-2-ol, 2-Methyl-3-butin-2-ol, Ethylenglykol-mono-*tert*-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly-(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesätdgten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, also mindestens ein molares Verhältnis von Metallsalz zu Metallcyanidsalz von 2,25 zu 1,00 und des Metallcyanidsalzes (z.B. Kaliumhexacyanocobaltat) in Gegenwart des organischen Komplexliganden (z.B. *tert*-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Das zahlenmittlere Molekulargewicht der erhaltenen Diblockcopolymere kann beispielsweise 200 g/mol bis 3000 g/mol, bevorzugt 350 g/mol bis 1800 g/mol und besonders bevorzugt 500 bis 1500 g/mol betragen. Der Anteil von eingebautem $CO_2$ (Gew.-%) in den Diblockcopolymeren, bezogen auf den Teil des Polymers der unter $CO_2$ gebildet wurde, kann 1,0 bis 30,0 Gew.-%, bevorzugt 1,5 bis 20,0 Gew.-%, besonders bevorzugt 2,0 bis 10,0 Gew.-%, insbesondere 2,5 bis 7,5 Gew.-% betragen.

In einer bevorzugten Ausführungsform wird in dem erfindungsgemäßen Verfahren ein molares Verhältnis von H-funktioneller Startersubstanz zu Alkylenoxid von 1 : 1 bis 1 : 30, bevorzugt 1 : 5 bis 1 : 20 und besonders bevorzugt von 1 : 8 bis 1 : 18 eingesetzt, wodurch ein bevorzugter HLB-Wert für das Diblockcopolymer erhalten werden kann. Die durch das erfindungsgemäße Verfahren hergestellten Diblockcopolymere können einen HLB-Wert von mindestens 6,0, bevorzugt mindestens 9,0, und besonders bevorzugt mindestens 11,0 besitzen.

Der Polydispersitätsindex der erhaltenen Diblockcopolymere kann weniger als 2,00, bevorzugt weniger als 1,60 und besonders bevorzugt weniger als 1,30 aufweisen.

Die nach dem erfindungsgemäßen Verfahren erhältlichen Diblockcopolymere weisen einen geringen PDI bei gleichzeitig hohem HLB-Wert auf und sind dadurch geeignet als Tenside in z. B. Wasch- oder Spülmitteln eingesetzt zu werden. Durch die hydrolytische Abbaubarkeit der erfindungsgemäßen Diblockcopolymere können diese leicht in Klärwerken entsorgt werden.

In einer ersten Ausführungsform betrifft die Erfindung ein Verfahren zur Herstellung von Diblockcopolymeren, enthaltend einen kohlenwasserstoffhaltigen Block A und einem polyethercarbonathaltigen Block B, durch Anlagerung von Alkylenoxid und Kohlendioxid an H-funktionelle Startersubstanz in Gegenwart eines Doppelmetallcyanid-Katalysators, dadurch gekennzeichnet, dass

die H-funktionelle Startersubstanz eine OH-Funktionalität von 1 besitzt, und

die H-funktionelle Startersubstanz ausgewählt ist aus einer oder mehreren Verbindungen der Gruppe monofunktioneller Alkohole mit 10 bis 20 Kohlenstoffatomen.

In einer zweiten Ausführungsform betrifft die Erfindung ein Verfahren gemäß der ersten Ausführungsform, dadurch gekennzeichnet, dass die H-funktionelle Startersubstanz ausgewählt ist aus einer oder mehreren Verbindungen der Gruppe aliphatischer monofunktioneller Alkohole mit 10 bis 20 Kohlenstoffatomen.

In einer dritten Ausführungsform betrifft die Erfindung ein Verfahren gemäß der ersten Ausführungsform, dadurch gekennzeichnet, dass die H-funktionelle Startersubstanz eine Struktur gemäß der allgemeinen Formel (I)

$$R^1\text{-OH} \qquad (I)$$

aufweist, wobei

$R^1$ eine Verbindung ausgewählt aus der Gruppe bestehend aus Alkylgruppe, Alkenylgruppe oder Alkinylgruppe, bevorzugt eine Alkylgruppe oder Alkenylgruppe, besonders bevorzugt eine Alkylgruppe ist.

In einer vierten Ausführungsform betrifft die Erfindung ein Verfahren gemäß einer der Ausführungsformen 1 bis 3, dadurch gekennzeichnet, dass die H-funktionelle Startersubstanzausgewählt ist aus einer oder mehreren Verbindungen der Gruppe monofunktioneller Alkohole mit 10 bis 18 , bevorzugt 10 bis 16, besonders bevorzugt 12 bis 16 Kohlenstoffatome.

In einer fünften Ausführungsform betrifft die Erfindung ein Verfahren gemäß einer der Ausführungsformen 1 bis 3, dadurch gekennzeichnet, dass die H-funktionelle Startersubstanz(en) ausgewählt ist aus einer oder mehreren Verbindungen der Gruppe enthaltend Decanol, Undecanol, Dodecanol, Tridecanol, Tetradecanol, Pentadecanol, Hexadecanol, Heptadecanol, Octadecanol, Nonadecanol, Eicosanol.

In einer sechsten Ausführungsform betrifft die Erfindung ein Verfahren gemäß einer der Ausführungsformen 1 bis 5, dadurch gekennzeichnet, dass als Alkylenoxid Ethylenoxid oder ein Gemisch aus mindestens zwei Alkylenoxiden enthaltend Ethylenoxid, besonders bevorzugt nur Ethylenoxid, eingesetzt wird.

In einer siebten Ausführungsform betrifft die Erfindung ein Verfahren gemäß der Ausführungsform 8, dadurch gekennzeichnet, dass das Gemisch aus mindestens zwei Alkylenoxiden enthaltend Ethylenoxid frei von Propylenoxid ist.

In einer achten Ausführungsform betrifft die Erfindung ein Verfahren gemäß einer der Ausführungsformen 1 bis 7, dadurch gekennzeichnet, dass das molare Verhältnis von H-funktioneller Startersubstanz zu Alkylenoxid 1,0 : 1,0 bis 1,0 : 30,0, bevorzugt 1,0 : 5,0 bis 1,0 : 20,0 und besonders bevorzugt von 1,0 : 8,0 bis 1,0 : 18,0 beträgt.

In einer neunten Ausführungsform betrifft die Erfindung ein Verfahren gemäß einer der Ausführungsformen 1 bis 8, dadurch gekennzeichnet, dass

($\alpha$) die H-funktionelle Startersubstanz oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionelle Startersubstanz oder dem Suspensionsmittel vor oder nach der Trocknung zugesetzt wird,

($\beta$) zur Aktivierung eine Teilmenge (bezogen auf die Gesamtmenge der bei der Aktivierung und Copolymerisation eingesetzten Menge an Alkylenoxiden) von Alkylenoxid zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch

mehrfach erfolgen kann,

(γ) Alkylenoxid, Kohlendioxid und gegebenenfalls H-funktionelle Startersubstanz zu der aus Schritt (β) resultierenden Mischung zugesetzt werden,

wobei wenigstens in einem der Schritte (α) oder (γ) mindestens eine H-funktionelle Startersubstanz zugesetzt wird.

In einer zehnten Ausführungsform betrifft die Erfindung ein Verfahren gemäß einer der Ausführungsformen 1 bis 9, wobei die H-funktionelle Startersubstanz während der Reaktion kontinuierlich in den Reaktor zudosiert wird.

In einer elften Ausführungsform betrifft die Erfindung die Verwendung eines Diblockcopolymers erhältlich nach einer der Ausführungsformen 1 bis 10 als Tensid.

In einer zwölften Ausführungsform betrifft die Erfindung Diblockcopolymere erhältlich nach einer der Ausführungsformen 1 bis 10.

In einer dreizehnten Ausführungsform betrifft die Erfindung Diblockcopolymere gemäß der Ausführungsform 12, dadurch gekennzeichnet, dass die Diblockcopolymere einen Polydispersitätsindex von weniger als 2,0, bevorzugt weniger als 1,6 und besonders bevorzugt weniger als 1,3 aufweisen.

In einer vierzehnten Ausführungsform betrifft die Erfindung Diblockcopolymere gemäß einer der Ausführungsformen 12 oder 13, dadurch gekennzeichnet, dass der Anteil von eingebautem $CO_2$ (Gew.-%) in den Diblockcopolymeren, bezogen auf den Teil des Polymers der unter $CO_2$ gebildet wurde, 1,0 bis 30,0 Gew.-%, bevorzugt 1,5 bis 20,0 Gew.-%, besonders bevorzugt 2,0 bis 10,0 Gew.-%, insbesondere 2,5 bis 7,5 Gew.-% beträgt.

In einer fünfzehnten Ausführungsform betrifft die Erfindung Diblockcopolymere gemäß einer der Ausführungsformen 12 bis 14, dadurch gekennzeichnet, dass die Diblockcopolymere ein zahlenmittleres Molekulargewicht von 200 g/mol bis 3000 g/mol, bevorzugt 350 g/mol bis 1800 g/mol und besonders bevorzugt 500 bis 1500 g/mol besitzen.

In einer sechzehnten Ausführungsform betrifft die Erfindung Diblockcopolymere gemäß einer der Ausführungsformen 12 bis 16, dadurch gekennzeichnet, dass die Diblockcopolymere einen HLB-Wert (Hydrophilic-Lipophilic-Balance-Wert) von mindestens 6,0, bevorzugt mindestens 9,0 und insbesondere bevorzugt mindestens 11,0 besitzen.

**Beispiele**

Die vorliegende Erfindung wird anhand der nachfolgenden Beispiele weiter erläutert, ohne jedoch darauf beschränkt zu sein.

**Messmethoden:**

Zur Bestimmung des HLB-Wertes der Diblockcopolymere wird die Korrelation zwischen Phaseninversionstemperatur (PIT) und HLB-Wert ausgenutzt. Die PIT ist dabei die Temperatur, bei der aus einer Wasser-in-Öl-Emulsion eine Öl-in-Wasser-Emulsion wird. Die PIT der Diblockcopolymere wird durch Messungen der elektrischen Leitfähigkeit in Abhängigkeit von der Temperatur an einer Emulsion aus Wasser (47 Gew.-%), Oktan (47 Gew.-%) und dem jeweiligen Diblockcopolymer (6 Gew.-%) ermittelt. Die PIT ist durch einen charakteristischen Abfall der Leitfähigkeit erkennbar. Auf Grund der Korrelation zwischen PIT und HLB-Wert kann durch einen Abgleich mit bekannten nicht-ionischen Tensiden der HLB-Wert der Diblockcopolymere ermittelt werden.

Die Bestimmung der hydrolytischen Abbaubarkeit der erfindungsgemäßen Diblockcopolymere sowie der eingesetzten Vergleichssubstanzen (vgl. Tabelle 1: "hydrolytischer Abbau") wurde bei 25 °C sowie bei 60 °C nach folgender allgemeinen Methode ermittelt: Der Abbau der Diblockcopolymere wurde durch Lagerung von 5 Gew.-% des Diblockcopolymers in Wasser bei 25 °C und bei 60 °C über einen Zeitraum von 30 Tagen bestimmt. Es wurde für jedes Diblockcopolymer jeweils eine Lösung aus 2,5 g des Diblockcopolymers in 47,5 g Wasser mit einem pH-Wert von 3, 7 und 11 hergestellt. Die Einstellung der pH-Werte erfolgte dabei für den pH-Wert 3 durch die Zugabe einer Salzsäure-Lösung mit einer Konzentration von 10 mol/l HCl (Fa. Merck Chemicals GmbH), für den pH-Wert 7 durch die Zugabe einer wässrigen Lösung mit einer Konzentration von 0,05 mol/l des Puffers Phosphatpuffer 7,4 (Fa. Merck Chemicals GmbH) und für den pH-Wert 11 durch die Zugabe einer Natriumhydroxid-Lösung mit einer Konzentration von 3 mol/l NaOH (Fa. Merck Chemicals GmbH). Eine hydrolytische Abbaubarkeit der Diblockcopolymere in Lösung fand statt, wenn bei den Lösungen eine Erniedrigung des Trübungspunktes um mindestens 5 % und eine Abnahme der Oberflächenspannung um mindestens 10 % innerhalb von 30 Tagen beobachtet wird. Die Oberflächenspannung wird dabei mit einem De Noüy-Ring-Tensiometer DCAT 11 der Firma Dataphysics Instruments GmbH gemessen. Bei dieser Messung wird ein Platin-Ring mit 18,7 mm Durchmesser in die Lösung enthaltend das Diblockcopolymer eingetaucht und wieder herausgezogen. Beim Herausziehen des Rings aus dieser Lösung wird ein Teil der Lösung durch den Ring mitgezogen, was zu einer Erhöhung der aufgewendeten Kraft führt. Die maximal gemessene Kraft die notwendig ist um den Ring aus der Lösung enthaltend das Diblockcopolymer zu ziehen ist proportional zur Oberflächenspannung. Der Trübungspunkt steht für die Temperatur ab welcher die Lösung enthaltend das Diblockcopolymer in zwei Phasen aufgetrennt wird und von einer klaren in eine trübe Lösung wechselt. In Tabelle 1 wird eine zu beobachtende hydrolytische Abbaubarkeit des Diblockcopolymers durch ein "x" gekennzeichnet, wobei "-" für das Fehlen des hydrolytischen Abbaus des Diblockcopolymers steht.

Zur Bestimmung der Temperaturabhängigkeit des Emulgierverhaltens der Diblockcopolymere wird eine Mischung aus Wasser (47 Gew.-%), Oktan (47 Gew.-%) und Diblockcopolymer (6 Gew.-%) hergestellt und mit Butanol versetzt. Dieses Gemisch besteht bei 25 °C aus zwei Phasen und bildet bei Erhöhung der Temperatur eine Emulsion aus den beiden Phasen als dritte Phase aus. Dafür wird die Probe in einem Wasserbad temperiert und visuell beurteilt, in welchem Temperaturbereich die Emulsion stabil bleibt. Der so ermittelte Temperaturbereich ist in Tabelle 1 angegeben als "Temperaturabhängigkeit des Emulgierverhaltens".

Für die Bestimmung der Molmassen werden die Diblockcopolymere in Methanol gelöst (ca. 1 mg/ml) und in einer HPLC/MS-Analyse untersucht. Die HPLC ist durch eine Grom-Sil-120-OSD-4 HE-Säule und einen Wasser/Acetonitril Laufmittelgradienten mit jeweils 0,1 Gew.-% Ameisensäure gekennzeichnet. Unter diesen Bedingungen eluieren die Homologen der Diblockcopolymere in einem breiten Peak der durch ein Massenspektrometer (LTQ Orbitrab XL mit ESI-Ionisation) detektiert wird. Diese Analyse ergibt ein Spektrum von Molmassen, die den einzelnen Homologen zugeordnet werden können. Die Intensität der Peaks wird der Häufigkeit der Homologen in der Probe zugeordnet und für die Bestimmung der zahlenmittleren Molmasse $M_n$ (auch: Molekulargewicht) und für die Berechnung des Polydispersitätsindex (PDI) verwendet.

Der Molenanteil des im Polymer eingebauten Carbonats in der Reaktionsmischung wird nach Formel (VIII) wie folgt berechnet, wobei folgende Abkürzungen verwendet werden:

F(4,5) = Fläche der Resonanz bei 4,5 ppm für cyclisches Ethylencarbonat (entspricht 4 Protonen).
F(4,3) = Fläche der Resonanz bei 4,3 ppm für Polyethylenglykolcarbonatpolyol (entspricht 4 Protonen).
F(4,2-3,3) = Fläche der Resonanz bei 4,2-3,3 ppm für Polyethylenglykol (entpricht 4 Protonen) und zwei Protonen für Dodecanol bzw. Hexadecanol.
F (0,9) = Fläche der Resonanz bei 0,9 ppm für Dodecanol bzw. Hexadecanol (entspricht 3 Protonen der endständigen Methylgruppe).

Unter Berücksichtigung der relativen Intensitäten wurde gemäß der folgenden Formel (VIII) für das polymer gebundene Carbonat ("lineares Carbonat" LC) in der Reaktionsmischung in mol% umgerechnet:

$$LC = \frac{0{,}25 * F(4{,}3)}{0{,}25 * F(4{,}3) + [0{,}25 * F(4{,}2\text{-}3{,}3) - 0{,}67 * F(0{,}9)] + 0{,}25 * F(4{,}5) + 0{,}33 * F(0{,}9)} * 100$$

$$(VIII)$$

Der Gewichtsanteil (in Gew.-%) polymer-gebundenen Carbonats (LC') in der Reaktionsmischung wurde nach Formel (IX) berechnet,

$$LC' = \frac{0{,}25 * F(4{,}3) * 88}{N} * 100\%  \qquad (IX)$$

wobei sich der Wert für N ("Nenner" N) nach Formel (X) berechnet:

$$N = 0{,}25 * F(4{,}3) * 88 + 0{,}25 * F(4{,}5) * 88 + [0{,}25 * F(4{,}2\text{-}3{,}3) - 0{,}67 * F(0{,}9)] * 44 + 0{,}33 * F(0{,}9) * M \qquad (X)$$

Der Faktor 88 resultiert aus der Summe der Molmassen von $CO_2$ (Molmasse 44 g/mol) und der von Ethylenoxid (Molmasse 44 g/mol), der Faktor 44 resultiert aus der Molmasse von Ethylenoxid. Der Faktor M beträgt 242 für Hexadecanol und 186 für Dodecanol.

Der Gewichtsanteil (in Gew.-%) an cyclischem Carbonat (CC') in der Reaktionsmischung wurde nach Formel (XI) berechnet,

$$CC' = \frac{0{,}25 * F(4{,}5) * 88}{N} * 100\%$$

(XI)

wobei sich der Wert für N nach Formel (X) berechnet.

Um aus den Werten der Zusammensetzung der Reaktionsmischung die Zusammensetzung bezogen auf den Polymer-Anteil (bestehend aus Polyether, welcher aus Ethylenoxid während der unter $CO_2$-freien Bedingungen stattfindenden Aktivierungsschritten aufgebaut wurde, und Diblockcopolymer, aufgebaut aus Starter, Ethylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Ethylencarbonat) rechnerisch eliminiert. Der Gewichtsanteil der Carbonat-Wiederholungseinheiten im Diblockcopolymer wurde in einen Gewichtsanteil Kohlendioxid mittels des Faktors F=44/(44+44) umgerechnet. Die Angabe des $CO_2$-Gehalts im Diblockcopolymer ("eingebautes $CO_2$"; siehe nachfolgende Beispiele und Tabelle 1) ist normiert auf das Diblockcopolymer-Molekül, das bei der Copolymerisation und den Aktivierungsschritten entstanden ist.

**Eingesetzte Rohstoffe:**

1-Hexadecanol (Fa. Sigma-Aldrich)

1-Dodecanol (Fa. Sigma-Aldrich)

Ethylenoxid (Fa. Linde AG)

Marlipal 24/90 - Diblockcopolymer aus einem $C_{12}$-$C_{14}$-Alkoholgemisch und Ethylenoxid (Fa. Sasol)

Lutensol AT 13 - Diblockcopolymer aus einem $C_{16}$-$C_{18}$-Alkoholgemisch und Ethylenoxid (Fa. BASF SE)

**Beispiel 1: Herstellung eines Diblockcopolymers (DBC-1) mit 1-Hexadecanol als H-funktionelle Startersubstanz**

Schritt (a):

In einem 2 Liter Druckreaktor mit Gasdosierungseinrichtung wurden 200 mg getrockneter DMC-Katalysator (hergestellt nach Beispiel 6 von WO-A 01/80994) sowie 242,40 g 1-Hexadecanol vorgelegt. Die Suspension wurde dann auf 130 °C aufgeheizt und für 30 min ein konstanter Stickstoffstrom und ein reduzierter Druck von 100 mbar angelegt.

Schritt (β):

Anschließend wurde der Reaktor mit 50 bar $CO_2$ bei 130 °C beaufschlagt und 10 g Ethylenoxid (EO) auf einmal in den Reaktor eindosiert. Die Aktivierung des Katalysators machte sich durch eine Temperaturspitze ("Hotspot") und durch Druckabfall auf den Ausgangsdruck (50 bar) bemerkbar. Der Vorgang wurde ein weiteres Mal wiederholt.

Schritt (γ):

Nach der erfolgten Aktivierung wurde die Temperatur auf 100 °C eingestellt und 586,0 g Ethylenoxid innerhalb von 3 h in den Reaktor eindosiert. Der Fortschritt der Reaktion wurde an dem $CO_2$-Verbrauch beobachtet, wobei durch kontinuierlich geregelte Nachdosierung des Drucks bei 50 bar im Reaktor konstant gehalten wurde. Nach beendeter EO-Zugabe wurde bei dem oben angegebenen Druck weitergerührt, bis kein Verbrauch an $CO_2$ mehr beobachtet wurde (etwa 1 Stunde). Das Produkt wurde anschließend aus dem Reaktor entnommen und am Rotationsverdampfer von leicht flüchtigen Komponenten befreit.

Das so hergestellte Diblockcopolymer zeichnet sich durch folgende Eigenschaften aus:

Eingebautes $CO_2$ (Gew.-%) bezogen auf den Teil des Polymers, der unter $CO_2$ gebildet wurde: 6,1 Gew.-%;

Die Selektivität c/l betrug 1,16 und die Polydispersität betrug 1,02

**Beispiel 2: Herstellung eines Diblockcopolymers (DBC-2) mit 1-Dodecanol als H-funktionelle Startersubstanz**

Schritt (α):

In einem 2 Liter Druckreaktor mit Gasdosierungseinrichtung wurden 200 mg getrockneter DMC-Katalysator (hergestellt nach Beispiel 6 von WO-A 01/80994) sowie 144,10 g 1-Dodecanol vorgelegt. Die Suspension wurde dann auf 130 °C aufgeheizt und für 30 min ein konstanter Stickstoffstrom und ein reduzierter Druck von 100 mbar angelegt.

Schritt (β):

Anschließend wurde der Reaktor mit 50 bar $CO_2$ bei 130 °C beaufschlagt und 10 g Ethylenoxid auf einmal in den Reaktor eindosiert. Die Aktivierung des Katalysators machte sich durch eine Temperaturspitze ("Hotspot") und durch Druckabfall auf den Ausgangsdruck (50 bar) bemerkbar. Der Vorgang wurde ein weiteres Mal wiederholt.

Schritt (γ):

Nach der erfolgten Aktivierung wurde die Temperatur auf 100 °C eingestellt und 504,6 g Ethylenoxid innerhalb von 3 h in den Reaktor eindosiert. Der Fortschritt der Reaktion wurde an dem $CO_2$-Verbrauch beobachtet, wobei durch kontinuierlich geregelte Nachdosierung der Druck bei 50 bar im Reaktor konstant gehalten wurde. Nach beendeter EO-Zugabe wurde bei dem oben angegebenen Druck weitergerührt, bis kein Verbrauch an $CO_2$ mehr beobachtet wurde (etwa 1 Stunde). Das Produkt wurde anschließend aus dem Reaktor entnommen und am Rotationsverdampfer von leicht flüchtigen Komponenten befreit.

Das so hergestellte Diblockcopolymer zeichnet sich durch folgende Eigenschaften aus:

Eingebautes $CO_2$ (Gew.-%) bezogen auf den Teil des Polymers, der unter $CO_2$ gebildet wurde: 5,0 Gew.-%;

Die Selektivität c/l betrug 1,4 und die Polydispersität betrug 1,03

**Tabelle 1:**

| | | Beispiel 1 (Erfindung) | Beispiel 2 (Erfindung) | Beispiel 3 (Vergleich) | Beispiel 4 (Vergleich) |
|---|---|---|---|---|---|
| Diblockcopolymer | | DBC-1 | DBC-2 | Lutensol AT 13 | Marlipal 24/90 |
| Polydispersitätsindex | | 1,02 | 1,03 | 1,02 | 1,07 |
| Molekulargewicht $M_n$ (g/mol) | | 701 | 750 | 735 | 616 |
| Eingebautes $CO_2$ (Gew.-%)[1] | | 6,1 | 5,0 | 0 | 0 |
| HLB-Wert | | 12,9 | 15,0 | 12 | 13,4 |
| hydrolytischer Abbau bei 25°C [2] | pH 3 | - | - | - | - |
| | pH 7 | - | - | - | - |
| | pH 11 | - | - | - | - |
| hydrolytischer Abbau bei 60°C [2] | pH 3 | x | x | - | - |
| | pH 7 | - | - | - | - |
| | pH 11 | x | x | - | - |
| Trübungspunkt | | 60 °C | 88 °C | 77 °C | 82 °C |
| Temperaturabhängigkeit des Emulgierverhaltens | | 32-71°C | 41-72°C | 48-71°C | 49-70°C |
| [1] Eingebautes $CO_2$ (Gew.-%) bezogen auf den Teil des Polymers, der unter $CO_2$ gebildet wurde. [2] "x": Diblockcopolymer wird hydrolytisch abgebaut, "-": Diblockcopolymer wird nicht hydrolytisch abgebaut. | | | | | |

Die Ergebnisse in Tabelle 1 zeigen, dass die Diblockcopolymere nach dem erfindungsgemäßen Verfahren einen hohen HLB-Wert und gleichzeitig einen niedrigen PDI aufweisen. Die Diblockcopolymere aus den Beispielen 1 bis 4 sind bei Raumtemperatur in den Bereichen pH 3, 7 und 11 und im neutralen pH-Bereich auch bei 60°C stabil. Im Gegensatz zu den Diblockcopolymeren aus den Vergleichsbeispielen 3 und 4 können die Diblockcopolymere aus den erfindungsgemäßen Beispielen 1 und 2 jedoch bei 60°C durch die Änderung des pH-Wertes abgebaut werden.

Die Bildung der Emulsion (dritte Phase) ist bei dem Diblockcopolymer aus dem erfindungsgemäßen Beispiel 1 bereits in einem Temperaturbereich von 32 °C bis 71°C gegeben. Das entsprechende Diblockcopolymer aus Vergleichsbeispiel 3, welches keinen polyethercarbonathaltigen Block aufweist, bildet in einem engeren Temperaturbereich von 48 °C bis 71 °C eine Emulsion aus. Die im erfindungsgemäßen Beispiel 2 gebildete Emulsion ist mit einem Temperaturbereich von 41 °C bis 72 °C ebenfalls in einem breiteren Temperaturbereich stabiler als das entsprechende Vergleichsbeispiel 3 mit einem Bereich von 48 °C bis 71 °C. Das Emulgierverhalten der mit dem erfindungsgemäßen Verfahren erhaltenen Diblockcopolymere ist somit weniger temperaturabhängig als bei den Diblockcopolymeren aus den Vergleichsbeispielen 3 und 4.

**Patentansprüche**

1.  Verfahren zur Herstellung von Diblockcopolymeren, enthaltend einen kohlenwasserstoffhaltigen Block A und einem polyethercarbonathaltigen Block B, durch Anlagerung von Alkylenoxid und Kohlendioxid an H-funktionelle Startersubstanz in Gegenwart eines Doppelmetallcyanid-Katalysators, **dadurch gekennzeichnet, dass** die H-funktionelle Startersubstanz eine OH-Funktionalität von 1 besitzt, und die H-funktionelle Startersubstanz ausgewählt ist aus einer oder mehreren Verbindungen der Gruppe monofunktioneller Alkohole mit 10 bis 20 Kohlenstoffatomen.

2.  Verfahren gemäß Anspruch 1, **dadurch gekennzeichnet, dass** die H-funktionelle Startersubstanz ausgewählt ist aus einer oder mehreren Verbindungen der Gruppe aliphatischer monofunktioneller Alkohole mit 10 bis 20 Kohlenstoffatomen.

3.  Verfahren gemäß Anspruch 1, **dadurch gekennzeichnet, dass** die H-funktionelle Startersubstanz eine Struktur gemäß der allgemeinen Formel (I)

$$R^1\text{-OH} \qquad (I)$$

aufweist, wobei $R^1$ eine Verbindung ausgewählt aus der Gruppe bestehend aus Alkylgruppe, Alkenylgruppe oder Alkinylgruppe, bevorzugt eine Alkylgruppe oder Alkenylgruppe, besonders bevorzugt eine Alkylgruppe ist.

4.  Verfahren gemäß einem der Ansprüche 1 bis 3, **dadurch gekennzeichnet, dass** die H-funktionelle Startersubstanz ausgewählt ist aus einer oder mehreren Verbindungen der Gruppe monofunktioneller Alkohole mit 10 bis 18 , bevorzugt 10 bis 16, besonders bevorzugt 12 bis 16 Kohlenstoffatome.

5.  Verfahren gemäß einem der Ansprüche 1 bis 3, **dadurch gekennzeichnet, dass** die H-funktionelle Startersubstanz ausgewählt ist aus einer oder mehreren Verbindungen der Gruppe enthaltend Decanol, Undecanol, Dodecanol, Tridecanol, Tetradecanol, Pentadecanol, Hexadecanol, Heptadecanol, Octadecanol, Nonadecanol, Eicosanol.

6.  Verfahren gemäß einem der Ansprüche 1 bis 5, **dadurch gekennzeichnet, dass** als Alkylenoxid Ethylenoxid oder ein Gemisch aus mindestens zwei Alkylenoxiden enthaltend Ethylenoxid, besonders bevorzugt nur Ethylenoxid, eingesetzt wird.

7.  Verfahren gemäß Anspruch 6, **dadurch gekennzeichnet, dass** das Gemisch aus mindestens zwei Alkylenoxiden enthaltend Ethylenoxid frei von Propylenoxid ist.

8.  Verfahren gemäß einem der Ansprüche 1 bis 7, **dadurch gekennzeichnet, dass** das molare Verhältnis von H-funktioneller Startersubstanz zu Alkylenoxid 1,0 : 1,0 bis 1,0 : 30,0, bevorzugt 1,0 : 5,0 bis 1,0 : 20,0 und besonders bevorzugt von 1,0 : 8,0 bis 1,0 : 18,0 beträgt.

9.  Verfahren gemäß einem der Ansprüche 1 bis 8, **dadurch gekennzeichnet, dass**

(α) die H-funktionelle Startersubstanz oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionelle Startersubstanz oder dem Suspensionsmittel vor oder nach der Trocknung zugesetzt wird,

(β) zur Aktivierung eine Teilmenge (bezogen auf die Gesamtmenge der bei der Aktivierung und Copolymerisation eingesetzten Menge an Alkylenoxiden) von Alkylenoxid zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) Alkylenoxid, Kohlendioxid und gegebenenfalls H-funktionelle Startersubstanz zu der aus Schritt (β) resultierenden Mischung zugesetzt werden,

wobei wenigstens in einem der Schritte (α) oder (γ) mindestens eine H-funktionelle Startersubstanz zugesetzt wird.

10. Verfahren gemäß einem der Ansprüche 1 bis 9, wobei die H-funktionelle Startersubstanz während der Reaktion kontinuierlich in den Reaktor zudosiert wird.

11. Verwendung eines Diblockcopolymers erhältlich nach einem Verfahren gemäß einem der Ansprüche 1 bis 10 als Tensid.

12. Diblockcopolymere erhältlich nach einem Verfahren gemäß einem der Ansprüche 1 bis 11.

13. Diblockcopolymere gemäß Anspruch 12, **dadurch gekennzeichnet, dass** die Diblockcopolymere einen Polydispersitätsindex von weniger als 2,00, bevorzugt weniger als 1,60 und besonders bevorzugt weniger als 1,30 aufweisen.

14. Diblockcopolymere gemäß Anspruch 12 oder 13, **dadurch gekennzeichnet, dass** der Anteil von eingebautem $CO_2$ (Gew.-%) in den Diblockcopolymeren, bezogen auf den Teil des Polymers der unter $CO_2$ gebildet wurde, 1,0 bis 30,0 Gew.-%, bevorzugt 1,5 bis 20,0 Gew.-%, besonders bevorzugt 2,0 bis 10,0 Gew.-%, insbesondere 2,5 bis 7,5 Gew.-% beträgt.

15. Diblockcopolymere gemäß einem der Ansprüche 12 bis 14, **dadurch gekennzeichnet, dass** die Diblockcopolymere ein zahlenmittleres Molekulargewicht von 200 g/mol bis 3000 g/mol, bevorzugt 350 g/mol bis 1800 g/mol und besonders bevorzugt 500 bis 1500 g/mol besitzen.

Europäisches Patentamt
European Patent Office
Office européen des brevets

**EUROPÄISCHER RECHERCHENBERICHT**

Nummer der Anmeldung

EP 17 19 6961

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2012/022048 A1 (BASF SE [DE]; KUNST ANDREAS [DE]; ELING BEREND [NL]; LOEFFLER ACHIM [D] 23. Februar 2012 (2012-02-23) * Ansprüche 1,15 * * Seite 7, letzter vollständiger Absatz * * Seite 12, letzter vollständiger Absatz * * Seiten 12 und 13 überbrückender Absatz * * Seiten 14 und 15 überbrückender Absatz * ----- | 1-15 | INV. C08G64/18 C08G64/34 C08G65/26 |
| X | WO 2015/031348 A1 (SASOL CHEMICALS USA LLC [US]; NOVOMER INC [US]) 5. März 2015 (2015-03-05) | 11-15 | |
| Y | * Ansprüche 1,3,4,5,9,13,14 * * Beispiele 2,3,8,9,10, * * Tabelle E1 * ----- | 1-15 | |
| Y,D | WO 2011/117332 A1 (BAYER MATERIALSCIENCE AG [DE]; GUERTLER CHRISTOPH [DE]; HOFMANN JOERG) 29. September 2011 (2011-09-29) * Seite 28, Zeile 19 - Seite 29, Zeile 5 * ----- | 1-15 | |
| X,D | DE 27 12 162 A1 (HOECHST AG) 28. September 1978 (1978-09-28) * Beispiele 3-5 * * Anspruch 1 * ----- | 11-15 | RECHERCHIERTE SACHGEBIETE (IPC) C08G |

Der vorliegende Recherchenbericht wurde für alle Patentansprüche erstellt

| Recherchenort | Abschlußdatum der Recherche | Prüfer |
|---|---|---|
| Den Haag | 3. April 2018 | Schlicke, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 19 6961

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-04-2018

| Im Recherchenbericht angeführtes Patentdokument | Datum der Veröffentlichung | Mitglied(er) der Patentfamilie | Datum der Veröffentlichung |
|---|---|---|---|
| WO 2012022048 A1 | 23-02-2012 | BR 112013003891 A2 | 12-07-2016 |
| | | CN 103154084 A | 12-06-2013 |
| | | EP 2611853 A1 | 10-07-2013 |
| | | JP 5731651 B2 | 10-06-2015 |
| | | JP 2013536286 A | 19-09-2013 |
| | | KR 20130102051 A | 16-09-2013 |
| | | RU 2013112098 A | 27-09-2014 |
| | | SG 188244 A1 | 30-04-2013 |
| | | US 2013211041 A1 | 15-08-2013 |
| | | WO 2012022048 A1 | 23-02-2012 |
| WO 2015031348 A1 | 05-03-2015 | AU 2014311395 A1 | 07-04-2016 |
| | | CA 2921813 A1 | 05-03-2015 |
| | | CN 105814112 A | 27-07-2016 |
| | | EP 3039055 A1 | 06-07-2016 |
| | | RU 2016111037 A | 02-10-2017 |
| | | US 2016200962 A1 | 14-07-2016 |
| | | WO 2015031348 A1 | 05-03-2015 |
| WO 2011117332 A1 | 29-09-2011 | CA 2794087 A1 | 29-09-2011 |
| | | CN 103180361 A | 26-06-2013 |
| | | EP 2550314 A1 | 30-01-2013 |
| | | ES 2587257 T3 | 21-10-2016 |
| | | JP 2013522438 A | 13-06-2013 |
| | | KR 20130039719 A | 22-04-2013 |
| | | SG 183823 A1 | 30-10-2012 |
| | | US 2013072602 A1 | 21-03-2013 |
| | | WO 2011117332 A1 | 29-09-2011 |
| DE 2712162 A1 | 28-09-1978 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0014045 A1
- EP 2223953 A1
- WO 2011117332 A1
- DE 2712162 A1
- US 3404109 A
- US 3829505 A
- US 3941849 A
- US 5158922 A
- US 5470813 A

- EP 700949 A
- EP 743093 A
- EP 761708 A
- WO 9740086 A
- WO 9816310 A
- WO 0047649 A
- JP 4145123 B
- WO 0139883 A
- WO 0180994 A